# EUROPEAN PATENT APPLICATION

(11) **EP 3 223 514 A1**
(43) Date of publication of application: **27.09.2017**
(21) Application number: 15813894.1
(22) Date of filing: 19.11.2015
(51) Int. Cl.: H04N 5/445, H04N 7/14

(54) **SYSTEM AND METHOD FOR TELE-ASSISTANCE BY MEANS OF A SMART TELEVISION**

(30) Priority: 19.11.2014 ES 201431701
(71) Applicant: Scio Soft, S.L., 15004 A Coruña (ES)
(72) Inventor: BERMÚDEZ PESTONIT, Pablo, E-15004 A Coruña (ES); RAÑO JARES, Isaac, E-15004 A Coruña (ES); MOSQUERA COLLAZO, Begoña, E-15004 A Coruña (ES); VARELA FERNÁNDEZ, Carlos, E-15004 A Coruña (ES); LÓPEZ PEÑA, Fernando, E-15004 A Coruña (ES); VARELA FERNÁNDEZ, Gervasio, E-15004 A Coruña (ES); PAZ LÓPEZ, Alejandro, E-15004 A Coruña (ES); FAIÑA RODRÍGUEZ, Andres, E-15004 A Coruña (ES); DURO FERNÁNDEZ, Richard, E-15004 A Coruña (ES)
(74) Representative: Carvajal y Urquijo, Isabel
(86) International application number: PCT/ES2015/070828
(87) International publication number: WO 2016/079364

(57) **Abstract**

Telecare system and method through smart television, wherein the system comprises:
- a smart television (2) provided with a video camera (20), a microphone (22) and an IP connectivity module (26) for Internet (3) connection thereof;
- a control server (4) for the remote management, through the internet (3), of the channels available in the smart television (2), which are selected from:
• conventional television channels (12),
• contact people (11), and
• video-assistance services (9);

- a video server (5) for the management of the video communications between the smart television (2) and the contact people (11) or the video-assistance services (9).

With the ease of use of conventional television, it enables video communication, through the television set, with telecare services, family and friends in a simple and intuitive way.

## Description

### Field of the invention

The present invention is included in the field of smart televisions and telecare systems.

### Background of the invention

Nowadays, there are several telecare systems which enable an alarm signal to be sent upon any incident, being specially applied to disabled and elderly people. With that purpose, different specific devices are used which send an alarm signal.

The object of the present invention is to integrate the telecare systems in the television set itself.

### Description of the invention

The invention refers to a telecare system and method through a smart television set, comprising accompanying, communication and video-assistance functions. With the ease of use of conventional television, elderly people can communicate through the television set by video call with their family and friends, in a simple and intuitive way.

With the smart television of the present invention it is possible to call or receive calls from several devices: for example, from other smart televisions, mobile telephones, tablets and computers, a feature which only requires a specific application to be installed.

A first aspect of the present invention refers to a telecare system through a smart television. The system comprises:
- a smart television comprising a video camera, a microphone and an IP connectivity module for Internet connection thereof;
- a control server responsible for remote management, through the internet, of the channels available on the smart television, selected from:
   - conventional television channels,
   - contact people, and
   - video-assistance services;
- a video server responsible for managing the video communications between the smart television and the contact people or the video-assistance services.

In a preferred embodiment, the system comprises at least a video-assistance service which deals with the management of the video communication with a concrete operator of the video-assistance service.

In another preferred embodiment, the control server, in case a video communication cannot be established with the contact person chosen by the user of the smart television, is configured to establish an audio call with a telephone associated to said contact person using a voice over IP Private Branch Exchange (VoIP PBX). The control server may be configured by means of a web tool.

Video communication with the contact person or the video-assistance service chosen is preferably realized through an electronic device provided with Internet connectivity, a video camera and a microphone.

The smart television is preferably configured to display a conventional television channel selected by the user on screen, simultaneously with a videoconference that is being held with the contact person or with the video-assistance service.

In a preferred embodiment, the smart television is configured to display reminders which have been previously set, regarding dates and contents, in the control server.

The smart television may be provided with data storage means where the configuration of the available channels, received from the control service, is stored.

A second aspect of the present invention refers to a telecare method through smart television. The method comprises:
- configuring the channels that are available in a smart television provided with a video camera, microphone and an IP connectivity module for Internet connection thereof, said channels being selected from:
   - conventional television channels,
   - contact people, and
   - video-assistance services;
- when the smart television user chooses the channel of a contact person or the video-assistance service, establishing a video communication between the smart television and an electronic device provided with Internet connectivity, video camera and microphone associated to the contact person or the video-assistance service that has been selected;
- displaying the video communication on the smart television screen.

In a preferred embodiment, the method comprises displaying a conventional television channel selected by the user on screen, simultaneously with a videoconference that has been started with the contact person or with the video-assistance service.

The configuration of the channels available in a smart television can be performed remotely through a control server.

The method may also comprise displaying reminders on screen that have been previously set, regarding dates and contents, in the control server.

The method may comprise, in case a video communication cannot be established with the contact person chosen by the user of the smart television, the establishment of an audio call with a telephone associated with said contact person by using a VolP PBX.

### Brief description of the drawings

The following is a brief description of a series of drawings which will help understand the invention better specifically referring to an embodiment of said invention presented as a nonlimiting example thereof.
Figure 1 shows a diagram of the general structure of the interactive television service provided in the present invention.
Figure 2 shows the hardware and software structure of the smart television object of the present invention.
Figure 3 shows a smart television remote control.
Figure 4 shows selection, using the remote control, of a contact person with whom a videoconference is to be established.
Figure 5 shows the option to end the videoconference call with the contact person.
Figure 6 shows certain sport channel being viewed at the same time a videoconference with a contact person is being held.
Figure 7 shows a given channel being viewed at the same time a reminder for the user is displayed on the screen.
Figure 8 shows the possibility for the user to select a video-assistance channel.

### Detailed description of the invention

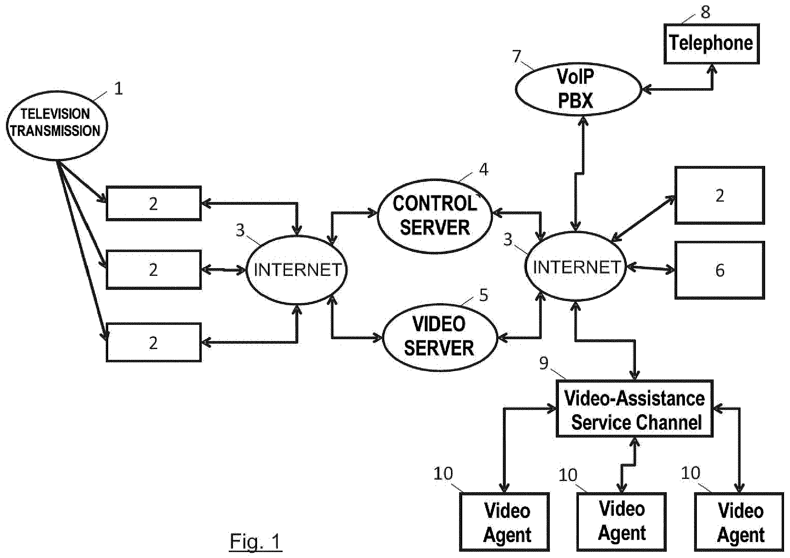

**Figure 1** represents an exemplary diagram of the general structure of the elements being involved in the interactive television service provided in the present invention.

The smart televisions 2 object of the present invention, receive the television transmission signal 1. The smart television 2 is a piece of equipment having the capacity to display the conventional channels and as well as specific communication or special-interest channels on a television screen, operated by a remote control developed ad hoc.

In turn, said smart televisions 2 are connected, through the internet 3, to a control server 4, for the global control of the system (users, channels, equipment, etc.), and a video server 5, specific for video communications.

The diagram also shows an electronic device 6, for example a computer, a tablet or a smartphone, which the smart televisions 2 can communicate with. In order to do so, these devices need a specific application to be installed.

The smart televisions 2 can communicate with a conventional telephone 8, either a mobile or a land phone, using a VoIP gateway 7.

In smart televisions 2 there are support channels (shopping, video-assistance, etc.) where the final addressee of the communication is not a concrete person, but a set of users (video agent or attention services contacts 10) who are connected to a video-assistance 9 service.

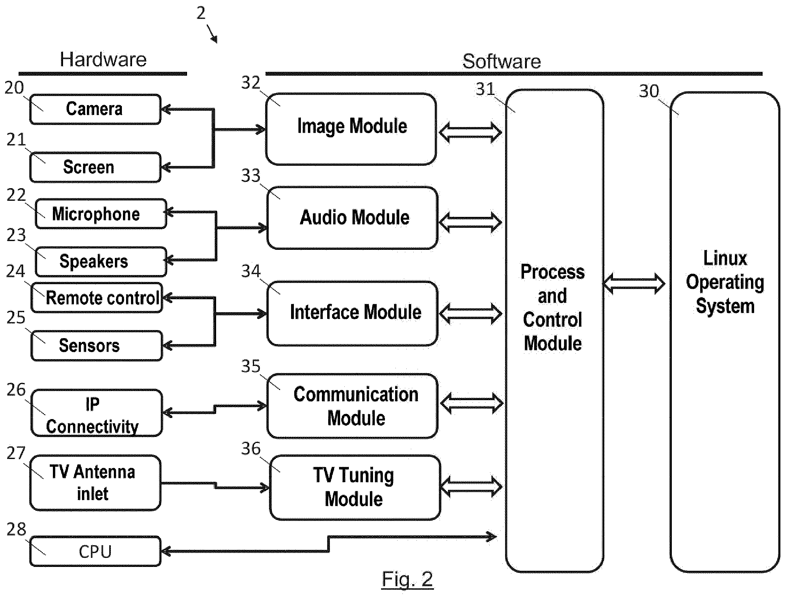

**Figure 2** shows a hardware and software structure of the smart television 2. The smart television 2 integrates in one device the television signal being received by the antenna with the communications and the video-services received through the Internet. The software included therein controls all the system functions, including its operation as a conventional television.

Regarding hardware, the smart television 2 is provided with:
- Video camera 20.
- Screen 21.
- Microphone 22.
- Speakers 23.
- Remote control 24 for the remote control of the smart television and the different functions thereof.
- Sensors 25: it can comprise smoke sensors, occupancy sensors, or any other type of sensor which can provide relevant information to the system about the situation in the place where it is installed or about the user state (heartbeat sensors, door opening sensors, etc.)
- IP connectivity module 26 for the Internet connection thereof.
- Television antenna inlet 27 to receive the television transmission signal 1.
- Processor 28: central processing unit.

Regarding the software, the smart television 2 uses a Linux 30 operating system, which monitors a control and processing module 31, managed by the processor 28. The control and processing module 31 manages:
- An image module 32, processes the video information from the video camera 20 and sends the information to be displayed on screen 21.
- An audio module 33, processes the audio information from the microphone 22 and sends the audio information to be reproduced in the speakers 23.
- An interface module 34, intended for receiving the information from the remote control 24 and the sensors 25.
- A communication module 35, intended for control of the IP connectivity module 26 in order to send and receive data from the Internet.
- A television tuning module 36, intended for receiving the television transmission signal 1 through the television antenna inlet 27.

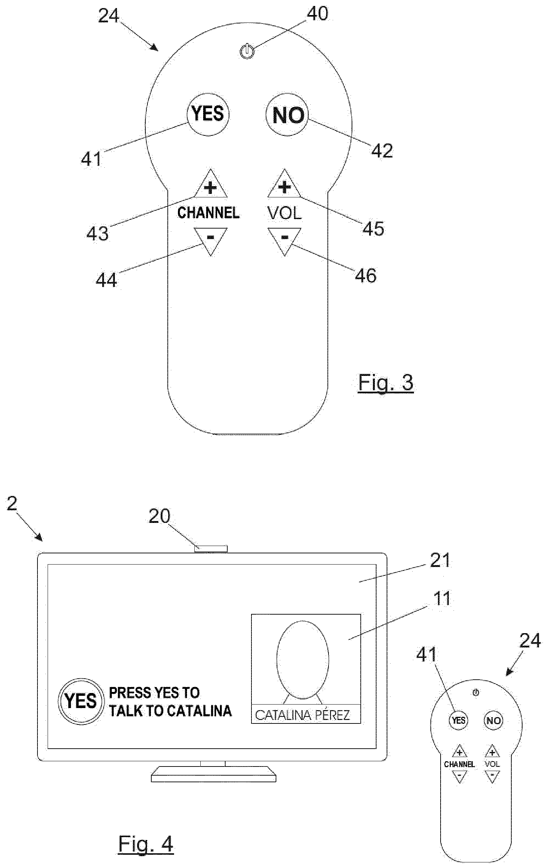

**Figure 3** shows, by way of example, a remote control 24 for remotely controlling the television 2, in which the buttons have been reduced to a maximum, so as to make it as simple as possible. Concretely, only 7 buttons are used: power on button 40, acceptance button 41 ("Yes" or affirmative response button), refusal button 42 ("NO" or negative response button), two buttons for channel change (43, 44) and two buttons for volume change (45, 46).

One of the functions of the smart television 2 is that it makes it possible to communicate through the television with any contact person 11 having an electronic device connected to the Internet, provided with a video camera and a microphone (any type of device provided with internet access, camera and microphone is appropriate, including obviously another smart television 2), in such a way that the user can have a videoconference with said contact person 11 in the television 2 itself. Thus, every contact is a channel.

The channel grid is configured in the control server 4, said channel grid containing the channels which the smart television 2 user have access to when going up and down the channels with the remote control 24. There are 3 types of these channels: the conventional television channels (the news, sport channel, etc.), contacts referring to people (a son or daughter, a friend, etc.) and contacts referring to assistance services (Red Cross, healthcare services, banks, etc.). This configuration is set with a web tool that grants access to the control server 4 and that will be used by the person supervising the smart television 2 (for example, the son or daughter of an elderly person, the Red Cross, etc.).

Personal contacts are added by searching in the smart televisions 2 which have already been registered in the system or, if it is a computer, tablet or mobile user, by creating a user name and a password for said user to have access to the system from any device (browser, app installed in the tablet, etc.). In the case of assistance service channels, the channels which are available and which can be added to the smart television 2 channels are within the control server 4. Thus, for the smart television 2 user everything is clear and the channels appear without any configuration being required from the smart television 2.

Therefore, by changing the channel using the channel change buttons (43, 44) of the remote control 24 different contact people 11 can be selected. Once the appropriate contact person 11 has been selected, the user can initiate a videoconference by pressing the acceptance button 41 to make a call, as it is shown in **Figure 4****.** When a user reaches a non "conventional" channel (contacts intended for a person or an assistance service), the image of the user with whom communication can be established from that channel is displayed on screen (all this being configured in the control server), and if the user wishes to establish contact the acceptance button 41 must be pressed. At this moment, the smart television 2 sends a signal to the control server 4 requesting for a video communication with the chosen user. The control server 4 verifies if the chosen user is a contact person 11 or an assistance or video-assistance service 9. In case of an assistance service 9, it verifies if there is any service operator 10 available and this is assigned the video-communication, by sending the operator the information about the smart television 2 that requested the communication and sending the operator equipment a communication identifier of the video server 5, transferring to the latter the control of the video call. In case the user being chosen is a person, it checks if that person has a smart television 2, or a specific application for a computer or tablet, and if it is available it establishes the video-communication as it has been described. If it is a user that is only provided with a conventional telephone, the control server 4 makes an audio call using the VoIP PBX. If the chosen user answers only an audio communications is established. This same process takes place the other way round: a user provided with the specific application can make a call from a computer to the smart television 2 of another user, in such a way that if that user is watching the television, or even with it being turned off, an alert sounds and a screen pops up asking if the video-communication requested is accepted, for which the acceptance button 41 is used to accept the call, or otherwise the refusal button 42 if it is refused.

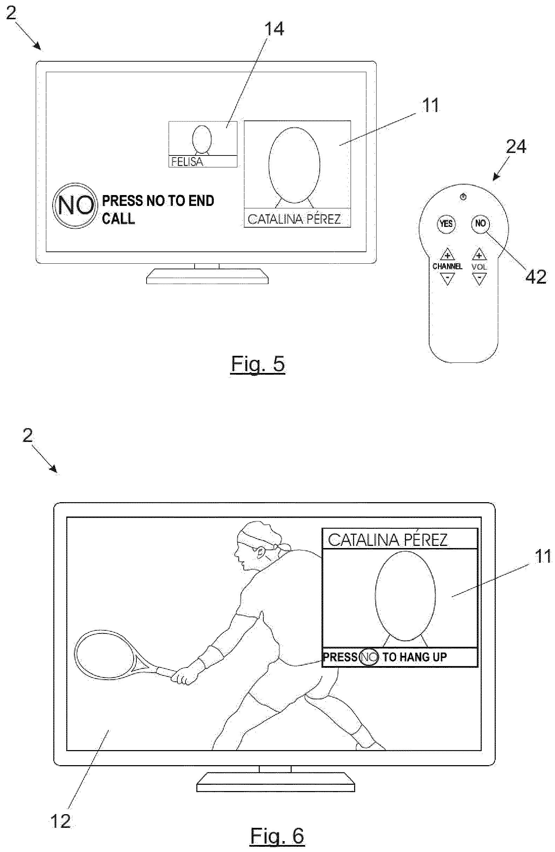

Once the videoconference with the contact person 11 is to be finished, the user only has to press the refusal button 42, as it can be seen in **Figure 5****.** Said figure shows the user 14 of the smart television 2 in the small central box (so that the user can see if the video camera has been properly taken within the frame limits thereof) and in the big box in the right the contact person 11 whom said user 14 is talking to.

One of the advantages of the smart television 2 of the present invention is that it allows a given conventional television channel 12 (sports, news, films, etc.) to be watched at the same time that a videoconference is held with other users. Thus, television can be shared, talking about and commenting on the best plays of a match or commenting on the program which is being watched at that moment. For example, **Figure 6** shows a smart television 2 wherein, at first, a videoconference has been established with a contact person 11. During the videoconference the user can change the channel (using the buttons 43 and 44 of the remote control 24) to select a determined channel 12, for example a sport channel where a tennis match is being broadcasted, which is displayed in full screen, except for a small box showing the contact person 11 whom the videoconference is being held with. At any moment the user can press the refusal button 42 to end the videoconference. Thus, the user could directly comment the match with the contact person 11 without being necessary to use a complementary device, such as a mobile phone or a computer, since the smart television 2 itself is being used for both tasks: watching the television and having a videoconference simultaneously. It should be noted that, instead of a videoconference, where a video of the contact person 11 is shown, an audio conference could be held with said contact person 11, in such a way that only audio and no image is transmitted. Another option would be not to show temporarily the user video (for example, by means of a command from the remote control 23) not to hinder the selected channel 12 from being properly viewed.

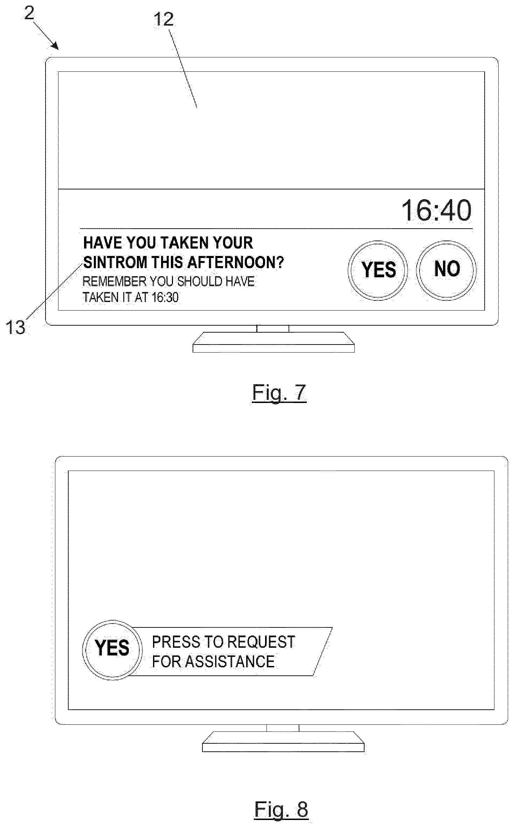

Another functionality that the smart television 2 can provide is to display reminders 13 on screen. The control server 4 is in charge of the management and configuration of said reminders. This configuration is set as in any agenda, by introducing a date and a start and end time, and the text that the reminder will show. Furthermore, within the same message there can be an audio reminder included, by recording a voice note being stored in the server at the moment of the recording. As it has been described, the control server 4 is provided with a web access to carry out with this type of tasks. Once configured, the control server 4 sends to the smart television 2 the reminder for it to be executed. This sending occurs when an edition takes place, such that the smart television 2 is always synchronized, but in such a way that if there is no access to the Internet at the moment the reminder is due to be displayed, the smart television knows that the reminder message must be displayed on screen, since it is stored locally. Thus, the notification thereof is guaranteed. The same happens with the channels: all the configuration thereof is transferred from the control server 4 to the smart television 2 so that the latter can operate by itself, even if there is no internet connection, but it is kept in the server so that if the smart television 2 breaks down, when the replacement television is installed and the user thereof is introduced, the control server 4 sends the whole configuration back to it. For example, and as it is sown in **Figure 7****,** a reminder is displayed at the bottom, minimizing the selected channel 12 at the top, for the user not to forget to take the afternoon medicine.

Likewise, the smart television 2 can be provided with different channels intended for purposes different to videoconference with contact people 11. Therefore, as it is shown in **Figure 8****,** it can have an assistance channel through which the user can request for assistance, contact a hospital operator, etc., being especially useful for elderly people. As it has been previously described, these channels are oriented to establish communication with a person within a group of people providing a service. These people are provided with a computer comprising a camera, a microphone and internet access, fitted with a specific application which enables video-communication with the smart television 2 to be established. Furthermore, the control server 4 makes it possible to see the amount of video communications established by each person in the assistance service and it assigns the requests to those people who have worked for a shorter period of time. Video communication is used for these channels, but in case the service only provides for audio communication a channel for calling a certain telephone number (for example, the emergency phone number) would be configured, and the control server 4 would call that number as it has already been described, but the management of a call being assigned to a person available will not depend on the interactive television service, but instead it will be managed by the "call centre" application of the emergency phone number, the call being interpreted by that system as a conventional audio/telephone call. The system may additionally have other different functions such as shopping, medicine supplies, bank operations, and in general any service that can be achieved using the Internet, with the advantage that it can be carried out from the television while watching a given conventional channel 12.

## Claims

1. Telecare system through smart television, **characterized in that** it comprises:
- a smart television (2) comprising a video camera (20), a microphone (22) and an IP connectivity module (26) for the connection thereof to the Internet (3);
- a control server (4) for the remote management, through the internet (3), of the channels available in the smart television (2), which are selected from:
• conventional television channels (12),
• contact people (11), and
• video-assistance services (9);
- a video server (5) for the management of the video communications between the smart television (2) and the contact people (11) or the video-assistance services (9).

2. System according to claim 1, **characterized in that** it comprises at least a video-assistance service (9), for the management of video communication with a particular operator (10) of the video-assistance service (9).

3. System according to any of the previous claims, **characterized in that** the control server (4), in case video communication with the contact person (11) chosen by the user (14) of the smart television (2) cannot be established, is configured to make an audio call to a telephone (8) associated to said contact person (11) using a Voice over IP Private Branch Exchange (7).

4. System according to any of the previous claims, **characterized in that** video communication with the contact person (11) or the video-assistance service (9) chosen is carried out through an electronic device (2, 6) provided with Internet connectivity, a video camera and a microphone.

5. System according to any of the previous claims, **characterized in that** the control server (4) can be configured by means of a web tool.

6. System according to any of the previous claims, **characterized in that** the smart television (2) is configured to display a conventional television channel (12), selected by the user (14), on screen simultaneously with the videoconference being held with the contact person (11) or the video-assistance service (9).

7. System according to any of the previous claims, **characterized in that** the smart television (2) is configured to display reminders (13) on screen that have been previously set, regarding date and contents, in the control server (4).

8. System according to any of the previous claims, **characterized in that** the smart television (2) is provided with data storage means where the configuration of the available channels received from the control server (4) is saved.

9. Telecare method through smart television, **characterized in that** it comprises:
- configuring the channels that are available in a smart television (2) provided with a video camera (20), a microphone (22) and an IP connectivity module (26) for Internet (3) connection thereof, said channels being selected from:
• conventional television channels (12),
• contact people (11), and
• video-assistance services (9);
- when the smart television (2) user (14) chooses the channel of a contact person (11) or the video-assistance service (9), establishing a video communication between the smart television (2) and an electronic device (2, 6) provided with Internet connectivity, a video camera and a microphone associated to the contact person (11) or the video-assistance service (9) that has been selected;
- displaying the video communication on the smart television (2) screen (21).

10. Method according to claim 9, **characterized in that** it comprises displaying on screen a conventional television channel (12) selected by the user (14) simultaneously with the videoconference being held with the contact person (11) or the video-assistance service (9).

11. Method according to any of claims 9 to 10, **characterized in that** the configuration of the channels available on a smart television (2) is carried out remotely through a control server (4).

12. Method according to claim 11, **characterized in that** it comprises displaying reminders (13) on screen that have been previously set, regarding date and content, in the control server (4).

13. Method according to any of claims 9 to 12, **characterized in that** it comprises, in case video communication with the contact person (11) chosen by the user (14) of the smart television (2) cannot be established, establishing an audio call to a telephone (8) associated to said contact person (11) using a Voice over IP Private Branch Exchange (7).
